(19) Europäisches Patentamt / European Patent Office / Office européen des brevets

(11) **EP 3 157 089 A1**

(12) **EUROPEAN PATENT APPLICATION**
published in accordance with Art. 153(4) EPC

(43) Date of publication:
**19.04.2017 Bulletin 2017/16**

(21) Application number: **15807471.6**

(22) Date of filing: **09.06.2015**

(51) Int Cl.:
$H01M\ 10/0525$ (2010.01)   $H01M\ 4/131$ (2010.01)
$H01M\ 4/505$ (2010.01)   $H01M\ 4/525$ (2010.01)
$H01M\ 4/587$ (2010.01)   $H01M\ 10/0566$ (2010.01)

(86) International application number:
**PCT/JP2015/066598**

(87) International publication number:
**WO 2015/190481 (17.12.2015 Gazette 2015/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **10.06.2014 JP 2014119172**

(71) Applicant: **Hitachi Chemical Co., Ltd.
Chiyoda-ku
Tokyo 100-6606 (JP)**

(72) Inventors:
• **KAJIMOTO, Takanori
Tokyo 100-0005 (JP)**
• **OCHIDA, Manabu
Tokyo 100-0005 (JP)**

(74) Representative: **Hoffmann Eitle
Patent- und Rechtsanwälte PartmbB
Arabellastraße 30
81925 München (DE)**

(54) **LITHIUM ION SECONDARY CELL**

(57) A lithium ion secondary battery having excellent input characteristics and safety is provided. The lithium ion secondary battery includes an electrode group made up of a positive electrode, a negative electrode, and a separator and an electrolytic solution provided in a battery container, the positive electrode has a current collector and a positive electrode composite applied to both surfaces of the current collector, the positive electrode composite contains layered lithium nickel manganese cobalt composite oxide as a positive electrode active material, an application quantity of the positive electrode composite to one surface is 110 to 170 g/m$^2$, a density of the positive electrode composite is 2.5 to 2.8 g/cm$^3$, the negative electrode has a current collector and a negative electrode composite applied to both surfaces of the current collector, and the negative electrode composite contains easily graphitizable carbon as a negative electrode active material.

FIG. 1

Printed by Jouve, 75001 PARIS (FR)

EP 3 157 089 A1

**Description**

<u>TECHNICAL FIELD</u>

The present invention relates to a lithium ion secondary battery.

<u>BACKGROUND ART</u>

The lithium ion secondary battery is a secondary battery with a high energy density, and is used for a power source of portable devices such as a notebook computer and a mobile phone by taking advantage of its characteristics. There are various types in the shape of the lithium ion secondary battery, and a wound-type structure of a positive electrode, a negative electrode, and a separator is adopted in a cylindrical lithium ion secondary battery. For example, a positive electrode material and a negative electrode material are each applied to two sheets of belt-like metal foils, a separator is interposed therebetween, and a laminated body thus obtained is wound spirally, thereby forming a wound group. This wound group is housed in a cylindrical battery can used as a battery container, and is sealed after electrolytic solution is injected therein, so that a cylindrical lithium ion secondary battery is formed.

Regarding the cylindrical lithium ion secondary battery, a 18650 lithium ion secondary battery has been widespread as a lithium ion battery for consumer use. An outer size of the 18650 lithium ion secondary battery is as small as about 18 mm in diameter and about 65 mm in height. Lithium cobalt oxide characterized by a large capacity and long life is mainly used for a positive electrode active material of the 18650 lithium ion secondary battery, and the battery capacity is approximately 1.0 Ah to 2.0 Ah (3.7 Wh to 7.4 Wh) in general.

In recent years, it is expected that the lithium ion secondary battery is developed not only for the consumer use in portable devices and the like, but also for the use of large-scale energy storage system for natural power sources such as photovoltaic power generation and wind power generation. The large-scale energy storage systems require an amount of electric power per system in an order of magnitude of several megawatts/hour (MWh).

For example, Patent Document 1 listed below discloses a cylindrical lithium ion secondary battery which includes, in a cylindrical battery container, an electrode wound group in which a positive electrode, a negative electrode, and a separator are wound. This battery has a discharge capacity of 30 Ah or larger, a positive electrode active material composite containing lithium manganese composite oxide is used for a positive electrode, and a negative electrode active material composite containing amorphous carbon is used for a negative electrode.

<u>RELATED ART DOCUMENTS</u>

<u>PATENT DOCUMENTS</u>

Patent Document 1: WO 2013/128677

<u>SUMMARY OF THE INVENTION</u>

<u>PROBLEMS TO BE SOLVED BY THE INVENTION</u>

A lithium ion secondary battery has been drawing attention as a high input/output power source used for an electric car, a hybrid electric car and the like. In the application to the field of automobile like this, excellent input characteristics for an improvement in the utilization efficiency of energy by regeneration are also required. In addition, excellent safety is also required.

However, the result of studies by the inventors of the present invention has clarified that the input characteristics of the lithium ion secondary battery described in Patent Document 1 are not sufficient.

The present invention has been made in view of the problems described above, and an obj ect of the present invention is to provide a lithium ion secondary battery having excellent input characteristics and safety.

<u>MEANS FOR SOLVING THE PROBLEMS</u>

Specific means for solving the problems are as follows. <1> A lithium ion secondary battery having an electrode wound group in which a positive electrode, a negative electrode, and a separator are wound and an electrolytic solution provided in a battery container, a discharge capacity of the battery being 30 Ah or more and less than 99 Ah, in which the positive electrode has a current collector and a positive electrode composite applied to both surfaces of the current collector, the positive electrode composite contains layered lithium nickel manganese cobalt composite oxide (NMC) as a positive electrode active material, an application quantity of the positive electrode composite to one surface is 110 to

170 g/m$^2$, and a density of the positive electrode composite is 2.5 to 2.8 g/cm$^3$, the negative electrode has a current collector and a negative electrode composite applied to both surfaces of the current collector, and the negative electrode composite contains easily graphitizable carbon as a negative electrode active material. <2> The lithium ion secondary battery according to <1>, in which an amount of the layered lithium nickel manganese cobalt composite oxide (NMC) contained in the positive electrode composite is 65 mass% or more with respect to a total amount of the positive electrode composite.

## EFFECTS OF THE INVENTION

The present invention can provide a lithium ion secondary battery having excellent input characteristics and safety.

## BRIEF DESCRIPTIONS OF THE DRAWINGS

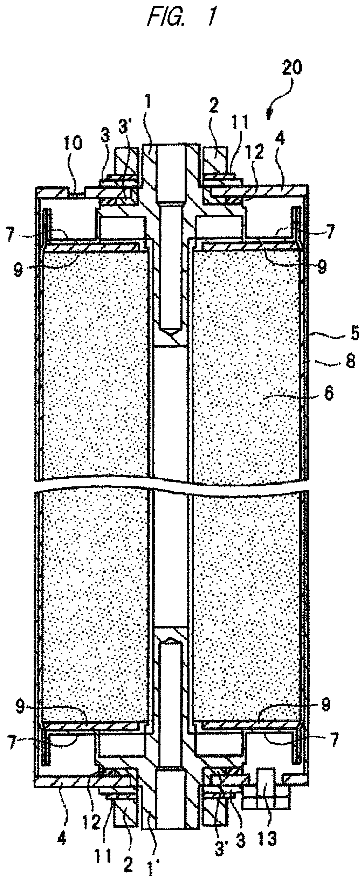

FIG. 1 is a sectional view of a lithium ion secondary battery of an embodiment to which the present invention can be applied.

## DETAILED DESCRIPTION OF PREFERRED EMBODIMENTS

In the case where a range is indicated as A to B in the following embodiment, it is assumed to be A or more and B or less unless otherwise specified.

(Embodiment)

First, summary of a lithium ion secondary battery will be briefly described. The lithium ion secondary battery has a positive electrode, a negative electrode, a separator, and an electrolytic solution in a battery container. The separator is disposed between the positive electrode and the negative electrode.
When the lithium ion secondary battery is charged, a battery charger is connected between the positive electrode and the negative electrode. At the time of the charging, lithium ions inserted in a positive electrode active material are desorbed, and released into the electrolytic solution. The lithium ions released into the electrolytic solution move in the electrolytic solution, pass through a separator made of fine porous films, and reach the negative electrode. The lithium ions which have reached the negative electrode are inserted into a negative electrode active material which constitutes the negative electrode.
When the battery is discharged, an external load is connected between the positive electrode and the negative electrode. At the time of the discharging, lithium ions which have been inserted in the negative electrode active material are desorbed and released into the electrolytic solution. At this time, electrons are released from the negative electrode. Then, the lithium ions released into the electrolytic solution move in the electrolytic solution, pass through the separator made of fine porous films, and reach the positive electrode. The lithium ions which have reached the positive electrode are inserted into the positive electrode active material which constitutes the positive electrode. At this time, by the lithium ions being inserted into the positive electrode active material, electrons flow into the positive electrode. In this way, discharging is performed by the electrons moving to the positive electrode from the negative electrode.
As described above, by inserting and desorbing lithium ions between the positive electrode active material and the negative electrode active material, the battery can be charged and discharged. Note that a configuration example of the actual lithium ion battery will be described later (for example, see FIG. 1).
Next, the positive electrode, the negative electrode, the electrolytic solution, the separator, and other constituent parts which are constituent elements of the lithium ion secondary battery of the present embodiment will be sequentially described below.

1. Positive electrode

In the present embodiment, a positive electrode described below is provided as a positive electrode applicable to the high-input and high-output lithium ion battery having a large capacity. The positive electrode (positive electrode plate) of the present embodiment is made up of a current collector and a positive electrode composite (positive electrode mixture) formed on the current collector. The positive electrode composite is a layer which is provided on the current collector and contains at least the positive electrode active material.
As the positive electrode active material, layered lithium nickel manganese cobalt composite oxide (hereinafter, referred to also as NMC) is contained. The NMC has high capacity and is excellent in safety.
From a viewpoint of further improvement of safety, a mixed active material of the NMC and spinel lithium manganese oxide (hereinafter, referred to also as sp-Mn) may be used.

From a viewpoint of higher capacity of the battery, the contained amount of NMC is preferably 65 mass% or more with respect to a total amount of the positive electrode composite, more preferably 70 mass% or more, and still more preferably 80 mass% or more.

As the NMC mentioned above, it is preferred to use the material represented by the following composition formula (Chem. 1).

$$\text{Li}_{(1+\delta)}\text{Mn}_x\text{Ni}_y\text{CO}_{(1-x-y-z)}\text{M}_z\text{O}_2 \dots \qquad \text{(Chem. 1)}$$

In the above-mentioned composition formula (Chem. 1), $(1+\delta)$ denotes a composition ratio of Li (lithium), x denotes a composition ratio of Mn (manganese), y denotes a composition ratio of Ni (nickel), and (1-x-y-z) denotes a composition ratio of Co (cobalt). Also, z denotes a composition ratio of an element M. The composition ratio of O (oxygen) is 2.

The element M is at least one element selected from a group including Ti (titanium), Zr (zirconium), Nb (niobium), Mo (molybdenum), W (tungsten), Al (aluminum), Si (silicon), Ga (gallium), Ge (germanium), and Sn (tin).

Here, $-0.15 < \delta < 0.15$, $0.1 < x \leq 0.5$, $0.6 < x+y+z \leq 1.0$, and $0 \leq z \leq 0.1$ are satisfied.

Also, as the sp-Mn mentioned above, it is preferred to use the material represented by the following composition formula (Chem. 2).

$$\text{Li}_{(1+\eta)}\text{Mn}_{(2-\lambda)}\text{M'}_\lambda\text{O}_4 \dots \qquad \text{(Chem. 2)}$$

In the above-mentioned composition formula (Chem. 2), $(1+\eta)$ denotes a composition ratio of Li, $(2-\lambda)$ denotes a composition ratio of Mn, and $\lambda$ denotes a composition ratio of an element M'. The composition ratio of O (oxygen) is 4.

The element M' is preferably at least one element selected from a group including Mg (magnesium), Ca (calcium), Sr (strontium), Al, Ga, Zn (zinc), and Cu (copper).

Here, $0 \leq \eta \leq 0.2$ and $0 \leq \lambda \leq 0.1$ are satisfied.

As the element M' in the above-mentioned composition formula (Chem. 2), it is preferred to use Mg or Al. By using Mg or Al, the battery life can be extended. In addition, the safety of the battery can be enhanced. Furthermore, since it is possible to reduce the elution of Mn by adding the element M', preservation characteristics and charging/discharging cycle characteristics can be enhanced.

As the positive electrode active material, materials other than the above-mentioned NMC and sp-Mn may be used.

As the positive electrode active material other than the above-mentioned NMC and sp-Mn, any material commonly used in this field may be used, and examples thereof include lithium-containing composite metal oxide other than NMC and sp-Mn, olivine type lithium salt, chalcogen compound, and manganese dioxide.

The lithium-containing composite metal oxide is metal oxide containing lithium and a transition metal or metal oxide in which part of the transition metal in the foregoing metal oxide is replaced with a different element. Examples of the different element include Na, Mg, Sc, Y, Mn, Fe, Co, Ni, Cu, Zn, Al, Cr, Pb, Sb, V, and B, among which Mn, Al, Co, Ni, and Mg are preferred. One of the different elements may be used alone or two or more of the different elements may be used in combination.

Examples of the lithium-containing composite metal oxide other than the above-mentioned NMC and sp-Mn include $\text{Li}_x\text{CoO}_2$, $\text{Li}_x\text{NiO}_2$, $\text{Li}_x\text{MnO}_2$, $\text{Li}_x\text{Co}_y\text{Ni}_{1-y}\text{O}_2$, $\text{Li}_x\text{Co}_y\text{M}_{1-y}\text{O}_z$, $\text{Li}_x\text{Ni}_{1-y}\text{M}_y\text{O}_2$ (M is at least one element selected from the group including Na, Mg, Sc, Y, Mn, Fe, Co, Ni, Cu, Zn, Al, Cr, Pb, Sb, V, and B and x=0 to 1.2, y=0 to 0.9, and z=2.0 to 2.3). Herein, the value x representing the molar ratio of lithium increases or decreases by charging and discharging.

In addition, examples of the olivine type lithium salt include $\text{LiFePO}_4$. Examples of the chalcogen compound include titanium disulfide and molybdenum disulfide. One of the positive electrode active materials may be used alone or two or more of the positive electrode active materials may be used in combination.

Hereinafter, the positive electrode composite and the current collector will be described in detail. The positive electrode composite contains a positive electrode active material, a binding material and the like, and is formed on the current collector. The forming method thereof is not particularly limited, and for example, it is formed in the following manner. That is, the positive electrode active material, the binding material, and other materials such as a conducting material and a thickening agent which are used as necessary are mixed in a dry method and formed into a sheet-like shape, and this is pressure-bonded to the current collector (dry method). Alternatively, the positive electrode active material, the binding material, and other materials such as a conducting material and a thickening agent which are used as necessary are dissolved or dispersed in a dispersing solvent to be a slurry, and this is applied to the current collector and then dried (wet method).

As the positive electrode active material, as mentioned above, the layered lithium nickel manganese cobalt composite oxide (NMC) is used. This is used in a powder (grain) state and is mixed.

As the particles of the positive electrode active materials of the NMC and sp-Mn, those in a massive form, a polyhedron shape, a spherical shape, an oval sphere shape, a tabular shape, a needle shape, a pillar shape and the like may be used.

Regarding a median diameter d50 of particles of the positive electrode active materials of the NMC and the sp-Mn (the median diameter d50 of the secondary particle in the case where primary particles are condensed to form the secondary particle), the ranges thereof can be adjusted as follows. That is, the lower limit of the range is 1 μm or more, preferably 3 μm or more, and more preferably 5 μm or more, and the upper limit is 30 μm or less, preferably 25 μm or less, and more preferably 15 μm or less.

In a range less than the above-mentioned lower limit, there is fear that a tap density (filling characteristics) is lowered and a desired tap density may be no longer acquired, and in a range exceeding the above-mentioned upper limit, the deterioration of the battery performance may be caused because spread of lithium ions in particles takes time. Furthermore, in the case of exceeding the above-mentioned upper limit, mixing characteristics with other materials such as a binding material and a conducting material may be lowered at the time of forming the electrode. Therefore, when this mixture is slurried and then applied, the mixture cannot be uniformly applied and unevenness like stripes may be formed. Note that the median diameter d50 can be calculated from a particle size distribution obtained by a laser diffraction and scattering method.

In the case where the primary particles are condensed to form the secondary particle, the ranges of an average particle diameter of the primary particle are as follows. That is, the lower limit of the range is 0.01 μm or more, preferably 0.05 μm or more, more preferably 0.08 μm or more, and still more preferably 0. 1 μm or more, and the upper limit is 3 μm or less, preferably 2 μm or less, more preferably 1 μm or less, and still more preferably 0.6 μm or less. In the case of exceeding the above-mentioned upper limit, the formation of the secondary particle in a spherical shape becomes difficult, and battery performances such as output characteristics may be deteriorated due to the deterioration of the tap density (filling characteristics) and the deterioration of a specific surface area. In addition, in the range less than the above-mentioned lower limit, the reversibility of charging and discharging may be deteriorated due to the decrease in crystallinity.

The ranges of a BET specific surface area of particles of the positive electrode active materials of the NMC and the sp-Mn are as follows. That is, the lower limit of the range is 0.2 $m^2$/g or more, preferably 0.3 $m^2$/g or more, and more preferably 0.4 $m^2$/g or more, and the upper limit is 4.0 $m^2$/g or less, preferably 2.5 $m^2$/g or less, and more preferably 1.5 $m^2$/g or less. In the range less than the above-mentioned lower limit, the battery performance may be deteriorated. In the case of exceeding the above-mentioned upper limit, it becomes difficult to increase the tap density, and mixing characteristics with other materials such as a binding material and a conducting material may be lowered. Therefore, application characteristics in the case where this mixture is slurried and then applied may be deteriorated. The BET specific surface area is a specific surface area (area per unit gram) obtained by a BET method.

Conducting materials for the positive electrode include, for example, metal materials such as copper and nickel, graphites such as natural graphite and artificial graphite, carbon black such as acetylene black, and carbonaceous materials like amorphous carbon such as needle coke. Note that one material among these may be used independently, or two or more materials may be used in combination.

The ranges of the contained amount (additive amount, percentage, quantity) of the conducting material relative to a mass of the positive electrode composite are as follows. That is, the lower limit of the range is 0.01 mass% or more, preferably 0.1 mass% or more, and more preferably 1 mass% or more, and the upper limit is 50 mass% or less, preferably 30 mass% or less, and more preferably 15 mass% or less. In the range less than the above-mentioned lower limit, conductivity may become insufficient. In addition, in the case of exceeding the above-mentioned upper limit, the battery capacity may be lowered.

The binding material of the positive electrode active material is not particularly limited, and a material whose solubility and dispersibility for a dispersing solvent are suitable is selected in the case where the positive electrode composite is formed by an application method. Specific examples thereof include: resin-based polymers such as polyethylene, polypropylene, polyethylene terephthalate, polymethyl methacrylate, polyimide, aromatic polyamide, cellulose, and nitrocellulose; rubber-like polymers such as SBR (styrene-butadiene rubber), NBR (acrylonitrile-butadiene rubber), fluoro-rubber, isoprene rubber, butadiene rubber, and ethylene-propylene rubber; thermoplastic elastomer polymers such as styrene butadiene styrene block co-polymer or its hydrogen additive, EPDM (ethylene propylene diene terpolymer), styrene ethylene butadiene ethylene co-polymer, and styrene isoprene styrene block co-polymer or its hydrogen additive; soft resin polymers such as syndiotactic-1,2-polybutadiene, polyvinyl acetate, ethylene-vinyl acetate co-polymer, and propylene α-olefin co-polymer; fluorine-based polymers such as a polyvinylidene fluoride (PVdF), polytetrafluoroethylene, fluorinated polyvinylidene fluoride, polytetrafluoroethylene ethylene co-polymer, and polytetrafluoroethylene vinylidene fluoride co-polymer; and polymer compositions having the ion conductivity of an alkali metal ion (in particular, lithium ion). Note that one material among these may be used independently, or two or more materials may be used in combination. From a viewpoint of stability of the positive electrode, it is preferred to use fluorine-based polymers such as polyvinylidene fluoride (PVdF) and polytetrafluoroethylene vinylidene fluoride co-polymer.

The ranges of the contained amount (additive amount, percentage, quantity) of the binding material relative to a mass of the positive electrode composite are as follows. That is, the lower limit of the range is 0.1 mass% or more, preferably 1 mass% or more, and more preferably 3 mass% or more, and the upper limit is 80 mass% or less, preferably 60 mass% or less, more preferably 40 mass% or less, and still more preferably 10 mass% or less. When the contained amount of the binding material is too low, the positive electrode active material cannot be fully bound and a mechanical strength of the positive electrode becomes insufficient, with the result that battery performances such as cycle characteristics may be deteriorated. Conversely, when too high, the battery capacity and conductivity may be lowered.

The layer formed on the current collector by using the above-mentioned wet method or dry method is preferably consolidated with a hand press, a roller press and the like in order to enhance a filling density of the positive electrode active material.

The density of the positive electrode composite consolidated as described above is 2.5 to 2.8 $g/cm^3$, and is preferably 2.55 $g/cm^3$ or more and 2.75 $g/cm^3$ or less, and more preferably 2.6 $g/cm^3$ or more and 2.7 $g/cm^3$ or less from a viewpoint of further improvement of the input/output characteristics and safety.

The application quantity of the positive electrode composite to one surface of the positive electrode current collector is 110 to 170 $g/m^2$, and is preferably 120 $g/m^2$ or more and 160 $g/m^2$ or less, and more preferably 130 $g/m^2$ or more and 150 $g/m^2$ or less from a viewpoint of further improvement of the energy density and input/output characteristics.

In light of the application quantity of the positive electrode composite to one surface of the positive electrode current collector and the positive electrode composite density as described above, the application film thickness of the positive electrode composite to one surface of the positive electrode current collector ([thickness of positive electrode - thickness of positive electrode current collector]/2) is preferably 39 to 68 $\mu$m, more preferably 43 to 64 $\mu$m, and still more preferably 46 to 60 $\mu$m.

As described above, regarding the positive electrode composite, the positive electrode composite density and the application quantity of the positive electrode composite to one surface are set within the ranges mentioned above. By this means, in the lithium ion secondary battery having a large capacity, that is, a discharge capacity of 30 Ah or more and less than 99 Ah, a high-input and high-output battery having a high energy density can be realized, while guaranteeing the safety.

The material of the current collector for the positive electrode is not particularly limited, and examples thereof include: metal materials such as aluminum, stainless steel, plated nickel, titanium, and tantalum; and carbonaceous materials such as carbon cloth and carbon paper. Among them, the metal material, especially aluminum is preferred.

The shape of the current collector is not particularly limited, and any materials processed into various shapes can be used. Examples thereof include: regarding metal materials, metal foil, metal column, metal coil, metal plate, metal thin film, expanded metal, punched metal, and foamed metal; and regarding carbonaceous materials, carbon plate, carbon thin film, and carbon cylindrical column. Among them, the metal thin film is preferably used. Note that the thin film may be formed into a mesh-like shape as appropriate. The thickness of the thin film is arbitrary, and the ranges thereof are as follows. That is, the lower limit of the range is 1 $\mu$m or more, preferably 3 $\mu$m or more, and more preferably 5 $\mu$m or more, and the upper limit is 1 mm or less, preferably 100 $\mu$m or less, and more preferably 50 $\mu$m or less. In the range less than the above-mentioned lower limit, sufficient strength required for the current collector cannot be obtained in some cases. In addition, in the case of exceeding the above-mentioned upper limit, plasticity may be lowered and processability may be deteriorated.

2. Negative electrode

In the present embodiment, a negative electrode described below is provided as a negative electrode applicable to the high-output lithium ion secondary battery having a large capacity. The negative electrode (negative electrode plate) of the present embodiment is made up of a current collector and a negative electrode composite (negative electrode mixture) formed on both surfaces of the current collector. The negative electrode composite contains a negative electrode active material which can electrochemically occlude and release lithium ions.

Examples of the negative electrode active material used in the present invention include easily graphitizable carbon (hereinafter, referred to also as soft carbon). The examples may include carbon materials other than the easily graphitizable carbon. The carbon material is roughly classified into a graphite-based material having an aligned crystal structure and a non-graphite-based material having a disordered crystal structure. Examples of the former include natural graphite and artificial graphite, and examples of the latter include easily graphitizable carbon, which has a disordered crystal structure, but easily becomes graphite by heating at 2000 to 3000°C, and non-graphitizable carbon which is hard to become graphite (hereinafter, referred to also as hard carbon). Specifically, graphite, cokes (petroleum-based coke, pitch coke, needle coke and the like), resin film baked carbon, fiber baked carbon, vapor deposited carbon and the like are used. The non-graphite-based carbon material can be manufactured by, for example, performing the heat treatment to petroleum pitch, polyacene, polyparaphenylene, polyfurfuryl alcohol, and polysiloxane, and the hard carbon or the soft carbon can be provided by changing a baking temperature. For example, the baking temperature of about 500°C to about 800°C is suitable for the manufacture of the hard carbon, and the baking temperature of about 800°C to about 1000°C is suitable for the manufacture of the soft carbon. In the non-graphitizable carbon, an interlayer spacing d002 value in a C axis direction obtained by a wide-angle X-ray diffraction method is defined to be 0.36 nm or more and 0.40 nm or less.

In the easily graphitizable carbon, an interlayer spacing d002 value in a C axis direction obtained by a wide-angle X-ray diffraction method is preferably 0.34 nm or more and less than 0.36 nm, more preferably 0.341 nm or more and 0.355 nm or less, and still more preferably 0.342 nm or more and 0.35 nm or less.

The content ratio of the easily graphitizable carbon (soft carbon) is preferably 20 mass% or more, more preferably 50 mass% or more, and still more preferably 70 mass% or more with respect to the total amount of the negative electrode active material. In addition, the easily graphitizable carbon (soft carbon) and the non-graphitizable carbon (hard carbon) may be used in combination. The mixed ratio (mass ratio) of the easily graphitizable carbon (soft carbon) and the non-graphitizable carbon (hard carbon) (the easily graphitizable carbon (soft carbon)/the non-graphitizable carbon (hard carbon)) is preferably 100/0 to 10/90, more preferably 100/0 to 20/80, still more preferably 100/0 to 50/50, and particularly preferably 100/0 to 70/30.

Further, the average particle diameter (d50) of the easily graphitizable carbon (soft carbon) is preferably 2 to 50 $\mu$m. When the average particle diameter is 2 $\mu$m or more, the specific surface area can be fallen within an appropriate range, and an initial charge/discharge efficiency of a lithium ion secondary battery is excellent. At the same time, the contact between particles is good and the input/output characteristics tend to be excellent. Meanwhile, when the average particle diameter is 50 $\mu$m or less, irregularities are less likely to be formed on an electrode surface, and short circuit of a battery can be suppressed. In addition, since the diffusion distance of Li from a particle surface to inside thereof is relatively short, the input/output characteristics of the lithium ion secondary battery tend to be enhanced. In view of this, the average particle diameter is preferably 5 to 30 $\mu$m, and more preferably 10 to 20 $\mu$m. For example, the particle size distribution can be measured by dispersing a sample into purified water containing surfactant by use of a laser diffraction particle size distribution measurement device (for example, SALD-3000J manufactured by Shimadzu Corporation), and the average particle diameter is calculated as median diameter (d50).

In addition, as the negative electrode active material, metal oxides such as tin oxide and silicon oxide, metal composite oxides, lithium single substance, lithium alloy such as lithium aluminum alloy, and materials such as Sn and Si which can form alloy with lithium, and the like may be used in combination. One material among these may be used independently, or two or more materials may be used in combination.

The metal composite oxide is not particularly limited as long as it can occlude and release lithium, and the oxide containing Ti (titanium) or Li (lithium) or both Ti and Li is preferred from a viewpoint of high current density charging/discharging characteristics.

State of charge (SOC) of the negative electrode of the present embodiment at a potential to be 0.1 V with respect to a lithium potential is preferably 65% or more and 90% or less, and more preferably 68% or more and 85% or less from a viewpoint of input characteristics and practicality. For example, the SOC at a potential to be 0.1 V with respect to a lithium potential can be measured as follows. First, a CR2032 coin cell is fabricated by assembling a negative electrode obtained by applying a negative electrode composite to one surface of a current collector and punched to a size of 15 mm in diameter, metal lithium punched to a size of 16 mm in diameter, a separator (for example, porous sheet made of polyethylene) punched to a size of 19 mm in diameter, and an electrolytic solution (for example, carbonate-based) under argon atmosphere. The coin cell is charged to 0 V (V vs Li/Li$^+$) at a constant current having a current density of 0.1 C at 25°C, and charged to a current density of 0.01 C at a constant voltage of 0 V. Next, the coin cell is discharged to 1.5 V (V vs Li/Li$^+$) at a constant current having a current density of 0.1 C, and three cycles of the charge and discharge are performed. Then, the charge capacity at the third cycle is defined as SOC 100%, and the charge capacity at the time of reaching 0.1 V at the third cycle is measured, and SOC is calculated from the following formula 1.

$$\text{SOC=CC charge capacity before 0.1 V at third cycle/CCCV charge}$$

$$\text{capacity before 0 V at third cycle ... (formula 1)}$$

Herein, in the coin cell, a direction where lithium ions are inserted into a negative electrode active material is defined as charge, and a direction where the lithium ions inserted in the negative electrode active material are desorbed is defined as discharge. Note that C means "current value (A) /discharge capacity of battery (Ah)".

The materials of the current collector for the negative electrode are not particularly limited, and examples thereof include metal materials such as copper, nickel, stainless steel, and nickel-plating steel. Among them, from a viewpoint of processability and cost, copper is preferred.

The shape of the current collector is not particularly limited, and materials processed into various shapes can be used. Examples thereof include metal foil, metal column, metal coil, metal plate, metal thin film, expanded metal, punched metal, and foamed metal. Among them, the metal thin film is preferred and the copper foil is more preferred. As the copper foil, there are a rolled copper foil formed by a rolling method and an electrolytic copper foil formed by an electrolytic method, and both are suitably used as the current collector.

Although the thickness of the current collector is not particularly limited, in the case where the thickness is less than 25 $\mu$m, the strength thereof can be enhanced by using strong copper alloy (phosphor bronze, copper-titanium alloy, Corson alloy, Cu-Cr-Zr alloy, and the like) instead of pure copper.

The application quantity of the negative electrode composite to one surface of the current collector is preferably 50 g/m$^2$ or more and 120 g/m$^2$ or less, and more preferably 60 g/m$^2$ or more and 100 g/m$^2$ or less from a viewpoint of an energy density and input/output characteristics.

The configuration of the negative electrode composite formed by using the negative electrode active material is not particularly limited, and the ranges of the negative electrode composite density are as follows. That is, the lower limit of the negative electrode composite density is preferably 0.7 g/cm$^3$ or more, more preferably 0.8 g/cm$^3$ or more, and still more preferably 0.9 g/cm$^3$ or more, and the upper limit is 2 g/cm$^3$ or less, preferably 1.9 g/cm$^3$ or less, more preferably 1.8 g/cm$^3$ or less, and still more preferably 1.7 g/cm$^3$ or less.

In the case of exceeding the above-mentioned upper limit, particles of the negative electrode active material tend to be destroyed, which may cause the increase in an initial irreversible capacity and the deterioration of high current density charging/discharging characteristics due to reduction of permeability of nonaqueous electrolytic solution into the vicinity of an interface between the current collector and the negative electrode active material. Also, in the range less than the above-mentioned lower limit, a battery resistance may be increased because the conductivity between the negative electrode active materials is lowered, and the capacity per volume may be lowered.

The binding material of the negative electrode active material is not particularly limited as long as it is a material stable for the nonaqueous electrolytic solution and dispersing solvent used at the time of forming an electrode. Examples thereof include: resin-based polymers such as polyethylene, polypropylene, polyethylene terephthalate, polymethyl methacrylate, aromatic polyamide, cellulose, and nitrocellulose; rubber-like polymers such as SBR (styrene-butadiene rubber), isoprene rubber, butadiene rubber, fluoro-rubber, NBR (acrylonitrile-butadiene rubber), and ethylene-propylene rubber; styrene butadiene styrene block co-polymer or its hydrogen additive; thermoplastic elastomer polymers such as EPDM (ethylene propylene diene terpolymer), styrene ethylene butadiene styrene co-polymer, and styrene isoprene styrene block co-polymer or its hydrogen additive; soft resin polymers such syndiotactic-1,2-polybutadiene, polyvinyl acetate, ethylene-vinyl acetate co-polymer, and propylene $\alpha$-olefin co-polymer; fluorine-based polymers such as polyvinylidene fluoride, polytetrafluoroethylene, fluorinated polyvinylidene fluoride, and polytetrafluoroethylene ethylenic co-polymer; and polymer compositions having an ion conductivity of alkali metal ion (in particular, lithium ion). One material among these may be used independently, or two or more materials may be used in combination.

The type of the dispersing solvent for forming the slurry is not limited as long as the solvent can dissolve or disperse the negative electrode active material, the binding material, and the conducting material and the thickening agent which are used as necessary, and both aqueous solvent and organic solvent may be used. Examples of the aqueous solvent include water, mixed solvent of alcohol and water, and others, and examples of the organic solvent include N-methyl pyrrolidone (NMP), dimethylformamide, dimethylacetamide, methyl ethyl ketone, cyclohexanone, methyl acetate, methyl acrylate, diethyltriamine, N,N-dimethylamino propylamine, tetrahydrofuran (THF), toluene, acetone, diethyl ether, dimethylacetamide, hexamethylphosphoramide, dimethyl sulfoxide, benzene, xylene, quinoline, pyridine, methylnaphthalene, hexane, and others. When using the aqueous solvent in particular, it is preferred to use a thickening agent. A dispersing agent and the like are added together with this thickening agent, and a slurry is produced by using a latex such as SBR. Note that one dispersing solvent among these may be used independently, or two or more dispersing solvents may be used in combination.

The ranges of the contained amount (additive amount, percentage, quantity) of the binding material relative to a mass of the negative electrode composite are as follows. That is, the lower limit of the range is preferably 0.1 mass% or more, more preferably 0.5 mass% or more, and still more preferably 0.6 mass% or more. The upper limit is 20 mass% or less, preferably 15 mass% or less, more preferably 10 mass% or less, and still more preferably 8 mass% or less.

In the case of exceeding the above-mentioned upper limit, a percentage of the binding material which does not contribute to the battery capacity may be increased, and the battery capacity may be lowered. In addition, in the range less than the above-mentioned lower limit, a strength of the negative electrode composite may be lowered.

In particular, the ranges of the contained amount of the binding material relative to a mass of the negative electrode composite in the case where the rubber-like polymer represented by SBR is used as a major component of the binding material are as follows. That is, the lower limit of the range is 0.1 mass% or more, preferably 0.5 mass% or more, and more preferably 0.6 mass% or more, and the upper limit is 5 mass% or less, preferably 3 mass% or less, and more preferably 2 mass% or less.

Also, the ranges of the contained amount of the binding material relative to a mass of the negative electrode composite in the case where the fluorine-based polymer represented by the polyvinylidene fluoride is used as a major component of the binding material are as follows. That is, the lower limit of the range is 1 mass% or more, preferably 2 mass% or more, and more preferably 3 mass% or more, and the upper limit is 15 mass% or less, preferably 10 mass% or less, and more preferably 8 mass% or less.

The thickening agent is used for adjusting the viscosity of the slurry. The thickening agent is not particularly limited, and examples thereof include carboxymethylcellulose, methylcellulose, hydroxymethylcellulose, ethylcellulose, polyvinyl alcohol, oxidized starch, phosphorylation starch, casein, salt thereof, and the like. One material among these may be used independently, or two or more materials may be used in combination.

The ranges of the contained amount of the thickening agent relative to a mass of the negative electrode composite in the case of using the thickening agent are as follows. That is, the lower limit of the range is 0.1 mass% or more, preferably 0.5 mass% or more, and more preferably 0.6 mass% or more, and the upper limit is 5 mass% or less, preferably 3 mass% or less, and more preferably 2 mass% or less.

In the range less than the above-mentioned lower limit, application properties of the slurry may be lowered. Also, in the case of exceeding the above-mentioned upper limit, a percentage of the negative electrode active material to the negative electrode composite is reduced, and the battery capacity may be lowered and the resistance between negative electrode active materials may be increased.

3. Electrolytic solution

The electrolytic solution of the present embodiment is composed of lithium salt (electrolyte) and nonaqueous solvent which dissolves the lithium salt. As necessary, additives may be added.

The lithium salt is not particularly limited as long as it can be used as an electrolyte of nonaqueous electrolytic solution for lithium ion batteries, and examples thereof include inorganic lithium salt, fluorine-containing organic lithium salt, and oxalatoborate salt shown below.

Examples of the inorganic lithium salt include inorganic fluoride salts such as $LiPF_6$, $LiBF_4$, $LiAsF_6$, and $LiSbF_6$, perhalogen acid salts such as $LiClO_4$, $LiBrO_4$, and $LiIO_4$, and inorganic chloride salt such as $LiAlCl_4$.

Examples of the fluorine-containing organic lithium salt include: perfluoroalkane sulfonate such as $LiCF_3SO_3$; perfluoroalkane sulfonylimide salts such as $LiN(CF_3SO_2)_2$, $LiN(CF_3CF_2SO_2)_2$, and $LiN(CF_3SO_2)(C_4F_9SO_2)$; perfluoroalkane sulfonylmethide salt such as $LiC(CF_3SO_2)_3$; fluoroalkyl fluorophosphates salts such as $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, and $Li[PF_3(CF_2CF_2CF_2CF_3)_3]$; and others.

Examples of the oxalatoborate salt include lithium bis(oxalato)borate, lithium difluoro oxalatoborate, and others.

One lithium salt among these may be used independently, or two or more lithium salts may be used in combination. Among them, lithium hexafluorophosphate ($LiPF_6$) is preferred when solubility for solvent, charging/discharging characteristics for use as a secondary battery, output characteristics, cycle characteristics, and others are comprehensively considered.

The concentration of electrolyte in the nonaqueous electrolytic solution is not particularly limited, and the ranges of the concentration of electrolyte are as follows. That is, the lower limit of the concentration is 0.5 mol/L or more, preferably 0.6 mol/L or more, and more preferably 0.7 mol/L or more. Also, the upper limit of the concentration is 2 mol/L or less, preferably 1.8 mol/L or less, and more preferably 1.7 mol/L or less. When the concentration is too low, an electric conductivity of the electrolytic solution may become insufficient. Also, when the concentration is too high, the electric conductivity may be lowered because the viscosity is increased. The performance of the lithium ion battery may be lowered due to the deterioration of the electric conductivity like this.

The nonaqueous solvent is not particularly limited as long as it is nonaqueous solvent which can be used as the solvent of electrolyte for lithium ion secondary batteries, and examples thereof include cyclic carbonate, chain carbonate, chain ester, cyclic ether, and chain ether described below.

As the cyclic carbonate, cyclic carbonate whose carbon number of an alkylene group constituting the cyclic carbonate is 2 to 6 is preferred, and cyclic carbonate whose carbon number thereof is 2 to 4 is more preferred. Specific examples thereof include ethylene carbonate, propylene carbonate, butylene carbonate, and others. Among them, ethylene carbonate and propylene carbonate are preferred.

As the chain carbonate, dialkyl carbonate is preferred, and chain carbonate whose carbon numbers of two alkyl groups are respectively 1 to 5 is preferred, and chain carbonate whose carbon numbers thereof are 1 to 4 is more preferred. Examples thereof include symmetric chain carbonates such as dimethyl carbonate, diethyl carbonate, and di-n-propyl carbonate; asymmetric chain carbonates such as ethyl methyl carbonate, methyl-n-propyl carbonate, and ethyl-n-propyl carbonate; and others. Among them, dimethyl carbonate, diethyl carbonate, and ethyl methyl carbonate are preferred.

Examples of chain ester include methyl acetate, ethyl acetate, propyl acetate, methyl propionate, and others. Among them, it is preferred to use the methyl acetate from a viewpoint of the improvement in low-temperature characteristics.

Examples of cyclic ether include tetrahydrofuran, 2-methyl tetrahydrofuran, tetrahydropyran, and others. Among them, it is preferred to use tetrahydrofuran from a viewpoint of the improvement in input/output characteristics.

Examples of chain ether include dimethoxyethane, dimethoxymethane, and others.

One material of these may be independently used and two or more materials may be used in combination, but it is preferred to use a mixed solvent in which two or more kinds of compounds are used together, and it is preferred to use high dielectric constant solvent of cyclic carbonates and low viscosity solvent such as chain carbonates and chain esters together. One of preferred combinations is the combination using cyclic carbonates and chain carbonates as main constituents. Among them, the combination in which the sum total of the cyclic carbonates and the chain carbonates to the nonaqueous solvent is 80 vol.% or more, preferably 85 vol. % or more, and more preferably 90 vol.% or more, and the volume of the cyclic carbonates to the sum total of the cyclic carbonates and the chain carbonates is within the following ranges is preferred. The lower limit of a volume of the cyclic carbonates is 5 vol.% or more, preferably 10 vol.% or more, and more preferably 15 vol.% or more, and the upper limit is 50 vol.% or less, preferably 35 vol.% or less, and more preferably 30 vol.% or less. By using the combination of nonaqueous solvents like this, cycle characteristics and high temperature preservation characteristics of the battery (in particular, remaining capacity after high temperature preservation and a high-load-discharging capacity) are enhanced.

The additive is not particularly limited as long as it is the additive for the nonaqueous electrolytic solution of the lithium ion battery, and examples thereof include heterocyclic compound containing nitrogen, sulfur, or nitrogen and sulfur, cyclic carboxylic acid ester, fluorine-containing cyclic carbonate, and other compounds having unsaturated bonding within a molecule. Fluorine-containing cyclic carbonate and other compounds having unsaturated bonding within a molecule are preferred from a viewpoint of the extension of the battery life.

Examples of the fluorine-containing cyclic carbonate include fluoroethylene carbonate, difluoroethylene carbonate, trifluoroethylene carbonate, tetrafluoroethylene carbonate, trifluoropropylene carbonate, and others.

Examples of the other compounds having unsaturated bonding within a molecule include vinylene carbonate and others.

Other than the above-mentioned additives, additives such as an overcharging prevention material, a negative electrode coating material, a positive electrode protection material, a high input/output material may be used in accordance with desired functions.

By means of the above-mentioned other additives, for example, it is possible to suppress an abrupt electrode reaction in an abnormal state due to overcharging, enhance the capacity maintenance characteristics and cycle characteristics after high temperature preservation, and enhance the input/output characteristics.

4. Separator

The separator is not particularly limited as long as it has ionic permeability while electronically insulating the positive electrode and the negative electrode, and is provided with resistance against oxidization on the positive electrode side and reduction on the negative electrode side. As materials (substances) for the separator which satisfy the characteristics mentioned above, for example, resin, inorganic substance, and glass fiber are used.

As the resin, olef in-based polymer, fluorine-based polymer, cellulose-based polymer, polyimide, nylon, and others are used, and it is preferred to select from materials which are stable for the nonaqueous electrolytic solution and excellent in solution retention, and porous sheet, nonwoven fabric or the like using polyolefin such as polyethylene or polypropylene as a raw material is preferably used.

As the inorganic substance, oxides such as alumina and silicon dioxide, nitrides such as aluminum nitride and silicon nitride, sulfates such as barium sulfate and calcium sulfate, and others are used. For example, it is possible to use the separator obtained by adhering the above-mentioned inorganic substance in fiber shape or particle shape to a base material in a thin film shape such as nonwoven fabric, woven fabric, and fine porous film. As the base material in a thin film shape, a material whose pore diameter is 0.01 to 1 $\mu$m and thickness is 5 to 50 $\mu$m is suitably used. Also, for example, the material which is made of the above-mentioned inorganic substance in the fiber shape or particle shape and formed into a composite porous layer by using a binding material such as resin can be used as the separator. Furthermore, it is also possible to use the separator obtained by forming this composite porous layer on the surface of the positive electrode or the negative electrode. For example, a composite porous layer obtained by binding alumina particles whose 90% particle size is less than 1 $\mu$m with using fluororesin as a binding material may be formed on the surface of the positive electrode.

5. Other constituent parts

A cleavage valve may be provided as one of other constituent parts of the lithium ion secondary battery. By opening the cleavage valve, a pressure rise inside the battery can be suppressed, and safety can be enhanced.

Also, a component part which discharges an inert gas (for example, carbon dioxide) in association with temperature increase may be provided. By providing the component part like this, it becomes possible to promptly open the cleavage valve by the generation of the inert gas when a temperature inside the battery is increased, and the safety can be enhanced. Examples of the material used for the above-mentioned component part include lithium carbonate, polyalkylene carbonate resin, and others. Examples of polyalkylene carbonate resin include polyethylene carbonate, polypropylene carbonate, poly(1,2-dimethyl ethylene carbonate), polybutene carbonate, polyisobutene carbonate, polypentene carbonate, polyhexene carbonate, polycyclopentene carbonate, polycyclohexene carbonate, polycyclohepten carbonate, polycyclooctane carbonate, polylimonene carbonate, and others. As the materials used for the above-mentioned component part, lithium carbonate, polyethylene carbonate, and polypropylene carbonate are preferred.

(Discharge capacity of lithium ion secondary battery)

The discharge capacity of the lithium ion secondary battery of the present invention made up of the constituent elements described above is 30 Ah or more and less than 99 Ah, and is preferably 40 Ah or more and less than 99 Ah, and more preferably 55 Ah or more and less than 95 Ah from a viewpoint of achieving high input/output characteristics and high energy density, while guaranteeing the safety. The discharge capacity mentioned here is the discharge capacity at the time of discharging the voltage from 4.2 V to 2.7 V at a current of 0.5 C.

(Capacity ratio of negative electrode and positive electrode of lithium ion secondary battery)

In the present invention, the capacity ratio of the negative electrode and the positive electrode (negative electrode capacity/positive electrode capacity) is preferably 1 or more and less than 1.3, more preferably 1.05 to 1.25, and still more preferably 1.1 to 1. 2 from a viewpoint of safety and an energy density. When the capacity ratio is 1.3 or more, a positive electrode potential may be higher than 4.2 V at the time of charging, and thus the safety may be deteriorated (the positive electrode potential at this time means a potential with respect to Li potential).

Note that the negative electrode capacity represents [the discharge capacity of the negative electrode], and the positive electrode capacity represents [the initial charge capacity of the positive electrode - the larger one of irreversible capacities of the negative electrode and the positive electrode]. Here, [the discharge capacity of the negative electrode] is defined as the capacity calculated by a charge-discharge device when lithium ions inserted in the negative electrode active material are desorbed. Also, [the initial charge capacity of the positive electrode] is defined as the capacity calculated by a charge-discharge device when lithium ions are desorbed from the positive electrode active material.

The capacity ratio of the negative electrode and the positive electrode can be calculated also from, for example, "the discharge capacity of the negative electrode/the discharge capacity of the lithium ion secondary battery". For example, the discharge capacity of the lithium ion secondary battery can be measured under the conditions of performing constant-current constant-voltage (CCCV) charge at 4.2 V and 0.1 to 0.5 C for a termination time of 2 to 5 hours, and then performing constant-current (CC) discharge to 2.7 V at 0.1 to 0.5 C. The discharge capacity of the negative electrode can be calculated by cutting the negative electrode of the lithium ion secondary battery whose discharge capacity is measured to a predetermined area, fabricating a monopolar cell using lithium metal as a counter electrode via a separator impregnated with an electrolytic solution, measuring a discharge capacity per predetermined area under the conditions of performing constant-current constant-voltage (CCCV) charge at 0 V and 0.1 C with a termination current of 0.01 C and then performing constant-current (CC) discharge to 1.5 V at 0.1 C, and converting the measured capacity into the total area used as the negative electrode of the lithium ion battery. In the monopolar cell, a direction where lithium ions are inserted into a negative electrode active material is defined as charge, and a direction where the lithium ions inserted in the negative electrode active material are desorbed is defined as discharge.

Note that C means "current value (A)/discharge capacity of battery (Ah)".

EXAMPLE

Hereinafter, the embodiment will be described in more detail based on examples. Note that the present invention is not limited to the following examples.

[Fabrication of positive electrode plate]

The positive electrode plate was fabricated in the following manner. Layered lithium nickel manganese cobalt composite oxide (BET specific surface area: 0.4 $m^2$/g, average particle diameter (d50) : 6. 5 $\mu$m) and spinel lithium manganese oxide (sp-Mn) as positive electrode active materials were mixed with a predetermined mass ratio of the active materials (NMC/sp-Mn) as shown in Table 1. A scale-like graphite (average particle diameter: 20 $\mu$m) and acetylene black (trade name: HS-100, average particle diameter: 48 nm (catalog value from DENKI KAGAKU KOGYO K. K.) manufactured by DENKI KAGAKU KOGYO K.K.) as conducting materials and polyvinylidene fluoride (trade name: KUREHA KF polymer #1120, manufactured by KUREHA CORP.) as a binding material were sequentially added into this mixture of positive electrode active materials and then mixed, thereby obtaining a mixture of positive electrode materials. The mass ratio of the active material, the conducting material, and the binding material was set to 90:5:5. Furthermore, N-methyl-2-pyrrolidone (NMP) as a dispersing solvent was added to the above-mentioned mixture and then kneaded, thereby forming a slurry. This slurry was applied substantially evenly and uniformly to both surfaces of an aluminum foil having a thickness of 20 $\mu$m serving as the current collector for the positive electrode. Thereafter, a drying process was performed and consolidation was carried out by pressing to obtain a predetermined density. The density of the positive electrode composite was set to 2.7 g/cm$^3$, and the application quantity of the positive electrode composite to one surface of the positive electrode current collector was set to 120 g/m$^2$.

[Fabrication of negative electrode plate]

The negative electrode plate was fabricated in the following manner. Easily graphitizable carbon (d002=0.35 nm, average particle diameter (d50)=10 $\mu$m, SOC at potential to be 0.1 V with respect to lithium potential=70%) was used as the negative electrode active material. Polyvinylidene fluoride (trade name: KUREHA KF polymer #1120, KUREHA CORP.) was added as a binding material to this negative electrode active material. The mass ratio of the negative electrode active material and the binding material was set to 92:8. Then, N-methyl-2-pyrrolidone (NMP) as a dispersing solvent was added thereto and then kneaded, thereby forming a slurry. This slurry was applied substantially evenly and uniformly by a specified quantity to both surfaces of rolled copper foil having a thickness of 10 $\mu$m serving as the current collector for the negative electrode. The negative electrode composite density was set to 1.15 g/cm$^3$.

For Comparative Examples, non-graphitizable carbon (d002=0.37 to 0.38 nm, average particle diameter (d50)=9 $\mu$m, Comparative Example 3) and artificial graphite (average particle diameter (D50) =20 $\mu$m, Comparative Example 4) were used in place of easily graphitizable carbon. Then, the negative electrode plate in which a -/+ ratio (capacity ratio of a negative electrode and a positive electrode (negative electrode capacity/positive electrode capacity)) was 1.2, styrene butadiene rubber (SBR) was used as a binding material, and 1. 5 mass% of carboxymethyl cellulose (CMC) was used as a thickening agent using water as a solvent was fabricated in the same manner as described above, while setting the ratios of the active material, the binding material, and the thickening agent to 98:1:1 (Comparative Example 3) and 97:2:1 (Comparative Example 4).

[Fabrication of battery]

The positive electrode plate and the negative electrode plate described above were wound with a separator made of polyethylene having a thickness of 30 $\mu$m interposed therebetween so that the electrode plates were not in direct contact with each other. At this time, the lead pieces of the positive electrode plate and the lead pieces of the negative electrode plate were made to be located on both end surfaces on the mutually opposite sides of the wound group. In addition, the lengths of the positive electrode plate, the negative electrode plate, and the separator were adjusted so that the wound group had the diameter of 65$\pm$0.1 mm.

Subsequently, as shown in FIG. 1, the lead pieces 9 led out from the positive electrode plate were transformed, and all of them were gathered and made to be in contact with each other in the vicinity of a bottom part of a flange 7 on the side of the positive electrode. The flange 7 on the side of the positive electrode was integrally formed so as to project from the circumference of an electrode pole (positive electrode external terminal 1) located approximately on the extension line of an axis of the wound group 6, and had a bottom part and a side part. After that, the lead piece 9 was connected and fixed to the bottom part of the flange 7 by ultrasonic welding. The lead pieces 9 led out from the negative electrode plate and a bottom part of the flange 7 on the side of the negative electrode were connected and fixed in the same manner. The flange 7 on the side of the negative electrode was integrally formed so as to project from the circumference of an electrode pole (negative electrode external terminal 1') located approximately on the extension line of the axis of the wound group 6, and had a bottom part and a side part.

Thereafter, the side part of the flange 7 on the side of the positive electrode external terminal 1 and the side part of the flange 7 on the side of the negative electrode external terminal 1' were covered by using adhesive tape, thereby forming an insulating coating 8. In the same way, the insulating coating 8 was formed also on the outer circumference of the wound group 6. For example, the insulating coating 8 was formed by winding this adhesive tape over and over again from the side part of the flange 7 on the side of the positive electrode external terminal 1 to the outer circumferential surface of the wound group 6 and from the outer circumferential surface of the wound group 6 to the side part of the flange 7 on the side of the negative electrode external terminal 1'. As the insulating coating (adhesive tape) 8, an adhesive tape whose base material was polyimide and whose one surface was coated with a methacrylate-based adhesive material was used. The thickness of the insulating coating 8 (the number of turns of the adhesive tape) was adjusted so that the maximum diameter part of the wound group 6 was slightly smaller than an inner diameter of a battery container 5 made of stainless steel, and the wound group 6 was inserted into the battery container 5. As for the battery container 5, the container whose outer diameter was 67 mm and whose inner diameter was 66 mm was used.

Subsequently, as shown in FIG. 1, a ceramic washer 3' was fitted to each of an electrode pole whose tip constituted the positive electrode external terminal 1 and an electrode pole whose tip constituted the negative electrode external terminal 1'. The ceramic washer 3' was made of alumina, and a thickness of a part abutting on the back surface of a battery lid 4 was 2 mm, the inner diameter was 16 mm, and the outer diameter was 25 mm. Subsequently, in a state where the ceramic washer 3 was placed on the battery lid 4, the positive electrode external terminal 1 was inserted through the ceramic washer 3, and in a state where a different ceramic washer 3 was placed on a different battery lid 4, the negative electrode external terminal 1' was inserted through the different ceramic washer 3. The ceramic washer 3 was made of alumina and had a plate-like shape with a thickness of 2 mm, an inner diameter of 16 mm, and an outer diameter of 28 mm.

Thereafter, a peripheral end face of the battery lid 4 was fitted to an opening of the battery container 5, and the whole area of the contact portion therebetween was laser-welded. At this time, each of the positive electrode external terminal 1 and the negative electrode external terminal 1' penetrated through a hole (opening) located at the center of the battery lid 4, and projected to the outside of the battery lid 4. In the battery lid 4, a cleavage valve 10 cleaving in accordance with internal pressure rise of the battery was provided. The cleaving pressure of the cleavage valve 10 was set to 13 to 18 kgf/cm$^2$ (1.27 to 1.77 MPa).

Subsequently, as shown in FIG. 1, a metal washer 11 was fitted to each of the positive electrode external terminal 1 and the negative electrode external terminal 1'. In this manner, the metal washer 11 was disposed on the ceramic washer 3. The metal washer 11 was made of a material smoother than a bottom surface of a nut 2.

Subsequently, the metal nut 2 was screwed on each of the positive electrode external terminal 1 and the negative electrode external terminal 1', and the battery lid 4 was fastened tightly and fixed between the flange 7 and the nut 2 via the ceramic washer 3, the metal washer 11, and the ceramic washer 3'. At this time, a fastening torque value was set to 70 kgf·cm (6.86 N·m). Note that the metal washer 11 did not rotate until fastening work was completed. In this state, power generation elements inside the battery container 5 were isolated from the outside air by the compression of an O-ring 12 made of rubber (EPDM) interposed between the back surface of the battery lid 4 and the flange 7.

Thereafter, an electrolytic solution was injected into the battery container 5 by a specified quantity from an injection port 13 provided in the battery lid 4, and then the injection port 13 was sealed, thereby completing a cylindrical lithium ion secondary battery 20.

As the electrolytic solution, a solution obtained by dissolving lithium hexafluorophosphate (LiPF$_6$) by 1.2 mol/L into a mixed solution in which ethylene carbonate, dimethyl carbonate, and ethyl methyl carbonate were mixed with a volume ratio of 2:3:2 and adding 0.8 mass% of vinylene carbonate (VC) as an additive was used.

[Evaluation of battery characteristics (discharge capacity and input characteristics)] (discharge capacity)

Under an environment of 25°C, a current value during charge and discharge was set to 0.5 CA. Charge was constant-current constant-voltage (CCCV) charge with an upper limit voltage of 4.2 V, and 3 hours were set as a termination condition. Discharge was CC discharge of 0.5 C, and 2.7 V was set as a termination condition. Also, a pause of 30 minutes was taken between the charge and the discharge. Three cycles thereof were carried out, and the charge capacity at the third cycle was defined as "a charge capacity at a current value of 0.5 C" and the discharge capacity at the third cycle was defined as "a discharge capacity at a current value of 0.5 C".

(Input Characteristics)

After measuring the discharge capacity at the third cycle described above, the charge with 3 hours as the termination condition was performed at the constant-current constant-voltage (CCCV) with an upper limit voltage of 4.2 V at a current value of 3 C, the charge capacity at this time was defined as "a charge capacity at a current value of 3 C", and input characteristics were calculated according to the following formula. Then, constant current discharge with 2.7 V as the termination condition was performed at a current value of 0.5 C.

```
Input characteristics (%)=(charge capacity at current value of 3 C/charge capacity at current value of 0.5 C)×100
```

Input characteristics of 80% or more were evaluated as "A"; input characteristics of 75% or more and less than 80% were evaluated as "B"; and input characteristics of less than 75% were evaluated as "C".

(Safety)

Safety was confirmed by the nail penetration test. First, the charging and discharging cycle at a current value of 0.5 C was repeated twice under an environment of 25°C in a voltage range of 4.2 to 2.7 V. Then, after charging the battery up to 4.2 V, a nail having a diameter of 5 mm was pierced into the central part of the battery (cell) at a speed of 1.6 mm/s, and the positive electrode and the negative electrode were short-circuited in the battery container. The variation of an external appearance of the battery at this time was checked. Specifically, an existence of a breakage of the battery container was checked. The breakage of the battery container included a crack, a swelling, and an ignition.

The result of the case where there was no breakage of the battery container (except a nailed part) was evaluated as "A", and the result of the case where the breakage of the battery container occurred was evaluated as "B".

The results of the Examples and Comparative Examples above were shown in the following Table 1.

[Table 1]

| Item | Positive electrode active material | Application quantity of positive electrode composite to one surface (g/m$^2$) | Density of positive electrode composite (g/cm$^3$) | Negative electrode active material | Discharge capacity (Ah) | Input characteristics | Safety |
|---|---|---|---|---|---|---|---|
| Example 1 | NMC | 120 | 2.7 | Easily graphitizable carbon | 55.2 | A | A |
| Example 2 | | 140 | 2.5 | Easily graphitizable carbon | 56.2 | B | A |
| Example 3 | | | 2.6 | Easily graphitizable carbon | 56.9 | A | A |
| Example 4 | | | 2.7 | Easily graphitizable carbon | 57.5 | A | A |
| Example 5 | | | 2.8 | Easily graphitizable carbon | 58.1 | A | A |
| Example 6 | | 160 | 2.7 | Easily graphitizable carbon | 59.3 | B | A |
| Example 7 | NMC/sp-Mn =65/25 | 160 | 2.7 | Easily graphitizable carbon | 52.1 | B | A |

EP 3 157 089 A1

15

(continued)

| Item | Positive electrode active material | Application quantity of positive electrode composite to one surface (g/m$^2$) | Density of positive electrode composite (g/cm$^3$) | Negative electrode active material | Discharge capacity (Ah) | Input characteristics | Safety |
|---|---|---|---|---|---|---|---|
| Comparative Example 1 | NMC | 140 | 2.4 | Easily graphitizable carbon | 55.4 | C | A |
| Comparative Example 2 | | | 2.9 | Easily graphitizable carbon | 58.7 | A | B |
| Comparative Example 3 | | | 2.7 | Non-graphitizable carbon | 61.0 | C | A |
| Comparative Example 4 | | | 2.7 | Graphite | 78.4 | C | B |

As shown in Examples 1 to 7 of the present invention, in the case where the layered lithium nickel manganese cobalt composite oxide is contained as the positive electrode active material, the application quantity of the positive electrode composite to one surface is 110 to 170 $g/m^2$, the density of the positive electrode composite is set to 2.5 to 2.8 $g/cm^3$, and the easily graphitizable carbon is contained as the negative electrode active material, the lithium ion secondary battery having a high discharge capacity, excellent input characteristics and safety can be obtained.

On the other hand, in the case of Comparative Example 1 where the density of the positive electrode composite is so low as to be outside the range, the input characteristics are inferior. In the case of Comparative Example 2 where the density of the positive electrode composite is so high as to be outside the range, the safety is inferior. In the cases of Comparative Example 3 where the non-graphitizable carbon is used as the negative electrode active material without using the easily graphitizable carbon and Comparative Example 4 where the graphite is used as the negative electrode active material without using the easily graphitizable carbon, the discharge capacity is high, but the input characteristics are significantly inferior. Furthermore, in the case of the graphite, the safety is also inferior.

Reference Signs List

| | |
|---|---|
| 1: | Positive electrode external terminal |
| 1': | Negative electrode external terminal |
| 2: | Nut |
| 3: | Ceramic washer |
| 3': | Ceramic washer |
| 4: | Battery lid |
| 5: | Battery container |
| 6: | Wound group |
| 7: | Flange |
| 8: | Insulating coating |
| 9: | Lead piece |
| 10: | Cleavage valve |
| 11: | Metal washer |
| 12: | O-ring |
| 13: | Injection port |
| 20: | Cylindrical lithium ion secondary battery |

**Claims**

1.  A lithium ion secondary battery comprising an electrode group made up of a positive electrode, a negative electrode, and a separator and an electrolytic solution provided in a battery container,
    wherein the positive electrode has a current collector and a positive electrode composite applied to both surfaces of the current collector,
    the positive electrode composite contains layered lithium nickel manganese cobalt composite oxide as a positive electrode active material,
    an application quantity of the positive electrode composite to one surface is 110 to 170 $g/m^2$, and a density of the positive electrode composite is 2.5 to 2.8 $g/cm^3$,
    the negative electrode has a current collector and a negative electrode composite applied to both surfaces of the current collector, and
    the negative electrode composite contains easily graphitizable carbon as a negative electrode active material.

2.  The lithium ion secondary battery according to claim 1,
    wherein an amount of the layered lithium nickel manganese cobalt composite oxide contained in the positive electrode composite is 65 mass% or more with respect to a total amount of the positive electrode composite.

FIG. 1

<div align="center">

**INTERNATIONAL SEARCH REPORT**

</div>

| | International application No. |
| --- | --- |
| | PCT/JP2015/066598 |

**A.   CLASSIFICATION OF SUBJECT MATTER**
*H01M10/0525*(2010.01)i, *H01M4/131*(2010.01)i, *H01M4/505*(2010.01)i,
*H01M4/525*(2010.01)i, *H01M4/587*(2010.01)i, *H01M10/0566*(2010.01)i

According to International Patent Classification (IPC) or to both national classification and IPC

**B.   FIELDS SEARCHED**

Minimum documentation searched (classification system followed by classification symbols)
H01M10/0525, H01M4/131, H01M4/505, H01M4/525, H01M4/587, H01M10/0566

Documentation searched other than minimum documentation to the extent that such documents are included in the fields searched
     Jitsuyo Shinan Koho            1922–1996   Jitsuyo Shinan Toroku Koho    1996–2015
     Kokai Jitsuyo Shinan Koho      1971–2015   Toroku Jitsuyo Shinan Koho    1994–2015

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | JP 2011-175933 A  (Hitachi Vehicle Energy, Ltd.), 08 September 2011 (08.09.2011), paragraphs [0042] to [0069], [0110] & US 2011/0206988 A1 | 1,2 |
| A | JP 2012-227068 A  (Hitachi, Ltd.), 15 November 2012 (15.11.2012), paragraphs [0053] to [0064] & US 2012/0270092 A1      & CN 102751532 A | 1,2 |
| A | JP 2009-135045 A  (Sanyo Electric Co., Ltd.), 18 June 2009 (18.06.2009), paragraphs [0037] to [0039], [0051], [0055] to [0056] & US 2009/0142651 A1 | 1,2 |

| ☒   Further documents are listed in the continuation of Box C. | ☐   See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search      27 August 2015 (27.08.15) | Date of mailing of the international search report      08 September 2015 (08.09.15) |
| --- | --- |
| Name and mailing address of the ISA/      Japan Patent Office      3-4-3,Kasumigaseki,Chiyoda-ku,      Tokyo 100-8915,Japan | Authorized officer |
| | Telephone No. |

Form PCT/ISA/210 (second sheet) (July 2009)

**INTERNATIONAL SEARCH REPORT**

International application No.

PCT/JP2015/066598

C (Continuation).    DOCUMENTS CONSIDERED TO BE RELEVANT

| Category* | Citation of document, with indication, where appropriate, of the relevant passages | Relevant to claim No. |
|---|---|---|
| E,A | JP 2015-125856 A  (Sanyo Electric Co., Ltd.), 06 July 2015 (06.07.2015), paragraphs [0025] to [0033], [0043] to [0044] & US 2015/0188184 A1    & CN 104752751 A | 1,2 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013128677 A